# EUROPÄISCHE PATENTANMELDUNG

(11) **EP 1 587 274 A2**
(43) Veröffentlichungstag der Anmeldung: **19.10.2005**
(21) Anmeldenummer: 05003979.1
(22) Anmeldetag: 24.02.2005
(51) Int. Cl.: H04L 29/06

(54) **Verfahren und Vorrichtung zur Datenübertragung mit automatischer Umsetzung zwischen unterschiedlichen Datenformaten**

(30) Priorität: 13.04.2004 DE 102004017839
(71) Anmelder: Deutsche Telekom AG, 53113 Bonn (DE)
(72) Erfinder: Böhm, Andreas Dr., 64342 Seeheim-Jugenheim (DE); Felt, Elisabeth Dipl.-Ing., 60599 Frankfurt (DE)

(57) **Zusammenfassung**

Um auf einfache Weise Daten, insbesondere digitale Dokumente, zwischen zwei an ein gemeinsames Kommunikationsnetz angeschlossenen Teilnehmern, die unterschiedliche Datenformate und/oder unterschiedliche Übertragungsprotokolle verwenden, zu übertragen, sieht die Erfindung eine Umsetzungseinrichtung vor, durch die eine Formatumsetzung der Daten in Abhängigkeit hinterlegter teilnehmerspezifischer Profile ausgeführt wird.

Weiterhin sieht die Erfindung ein entsprechendes Verfahren zur Datenübertragung, ein computerlesbares Medium mit einem gespeicherten Programm zur Durchführung des Verfahrens, sowie ein Kommunikationssystem vor.

## Beschreibung

### Beschreibung

Die Erfindung betrifft ein Verfahren und eine Vorrichtung zur Datenübertragung zwischen Teilnehmern, die an wenigstens ein Kommunikationsnetz angeschlossen sind, wobei die Teilnehmer unterschiedliche Datenformate und/oder Übertragungsprotokolle verwenden, sowie ein entsprechendes Kommunikationssystem und ein computerlesbares Medium mit einem gespeicherten Programm zur Durchführung des Verfahrens.

Im Bereich der Busines-To-Business-Integration, kurz B2B-Integration, besteht die primäre Zielsetzung darin, Medienbrüche zu vermeiden, indem Applikationen unabhängig voneinander agierender Unternehmen direkt miteinander kommunizieren können. Die Integration wird sowohl auf Transportebene als auch auf Geschäftsdokument- und Geschäftsprozessebene durchgeführt. Dazu werden heute in der Regel verbreitete Standards wie http(s), ftp oder XML verwendet, anstatt des kostspieligen EDI (Electronic Data Interchange), das meistens nur von großen Unternehmen unterstützt wurde.

Wenn zwei Unternehmen eine B2B-Integration durchführen wollen, können sie dies auf unterschiedliche Weise erreichen.

Zum einen kann die Schnittstelle der einen Applikation so geändert werden, dass die Schnittstellenprozesse, die Formate der ausgetauschten Geschäftsdokumente und die Transportprotokolle auf die Anforderungen der anderen zu integrierenden Applikation angepasst sind. Dies erfordert jedoch einen erheblichen Entwicklungsaufwand.

Zum anderen sind auch Integrationstools bekannt, die zwischen zwei Applikationen zweier Unternehmen zwischengeschaltet werden, um eine Kompatibilität der Applikationen herzustellen. Das Tool wird so konfiguriert und eingestellt, dass es die zwei Applikationen ansprechen und Nachrichten von ihnen empfangen kann und damit Nachrichten von einer zur anderen Applikation übertragen kann. Auch der Einsatz solcher Tools erfordert jedoch tiefgreifende IT-Kenntnisse, so dass für die Integration ein Integrationsprojekt mit erheblichem Arbeitseinsatz durchgeführt werden muss.

Der Erfindung liegt daher die Aufgabe zugrunde, einen Weg aufzuzeigen, wie auf einfache Weise Daten, insbesondere digitale Dokumente, zwischen zwei an wenigstens ein Kommunikationsnetz angeschlossenen Teilnehmern, die unterschiedliche Datenformate und/oder unterschiedliche Übertragungsprotokolle verwenden, übertragen werden können.

Diese Aufgabe wird durch den Gegenstand der unabhängigen. Ansprüche gelöst. Vorteilhafte Ausführungsformen und Weiterbildungen sind in den jeweiligen Unteransprüchen umschrieben.

Dementsprechend löst die Erfindung das technische Problem zum einen durch ein Verfahren zur Datenübertragung von einem ersten Teilnehmer zu wenigstens einem zweiten Teilnehmer, die über wenigstens ein Kommunikationsnetz verbunden werden können, wobei der erste und der wenigstens eine zweite Teilnehmer unterschiedliche Datenformate verwenden, das die folgenden Schritte aufweist:
- Hinterlegen von teilnehmerspezifischen Profilen für den ersten und den wenigstens einen zweiten Teilnehmer in einer dem Kommunikationsnetz zugeordneten Umsetzungseinrichtung,
- Übertragen von Daten in einem ersten Datenformat vom ersten Teilnehmer zur Umsetzungseinrichtung,
- Umsetzen der vom ersten Teilnehmer in einem ersten Datenformat empfangenen Daten in ein zweites, von dem wenigstens einen zweiten Teilnehmer auswertbares, Datenformat in Abhängigkeit der für den ersten und den wenigstens einen zweiten Teilnehmer hinterlegten teilnehmerspezifischen Profilen durch die Umsetzungseinrichtung,
- Übertragen der in das zweite Datenformat umgesetzten Daten von der Umsetzungseinrichtung zu dem wenigstens einen zweiten Teilnehmer.

Durch das Hinterlegen teilnehmerspezifischer Profile, das über eine einfache Nutzeroberfläche erfolgen kann, wird durch das Verfahren auf einfache Weise eine Automatisierung von Geschäftsprozessen erreicht. Eine Anforderung an einen automatisierten Geschäftsprozess besteht darin, ein digitales Geschäftsdokument, beispielsweise eine Bestellung, die in einer Applikation eines ersten Unternehmens in einem ersten Datenformat vorliegt, an eine Applikation eines zweiten Unternehmens zu übertragen. Dabei kommt es sehr häufig vor, dass die Applikation des zweiten Unternehmens das digitale Geschäftsdokument in einem zweiten Datenformat benötigt.

Das Verfahren umfasst daher bevorzugt das Hinterlegen einer Vielzahl von Umsetzungsregeln zur Umsetzung von Daten zwischen unterschiedlichen Datenformaten. Dementsprechend erfolgt das Umsetzen vorteilhaft mittels einer Umsetzungsregel, die aus einer Vielzahl in der Umsetzungseinrichtung hinterlegter Umsetzungsregeln in Abhängigkeit der hinterlegten teilnehmerspezifischen Profile ausgewählt wird.

Um eine große Anzahl von Eingangs- und Ausgangs-Datenformaten zu unterstützen, sieht das Verfahren vorteilhaft das Umsetzen der vom ersten Teilnehmer in einem ersten Datenformat empfangenen Daten in ein Zwischenformat und das Umsetzen des Zwischenformats in ein zweites, von dem wenigstens einen zweiten Teilnehmer auswertbares, Datenformat vor.

Bei n unterstützten Eingangs-Datenformaten und m unterstützten Ausgangs-Datenformaten wird bei Verwendung eines Zwischenformates die erforderliche Anzahl benötigter Umsetzungsregeln durch die Summe n + m bestimmt, anstatt durch das Produkt n * m. Bei einer großen Anzahl von Eingangs- und Ausgangs-Datenformaten wird daher durch den Einsatz eines Zwischenformates die erforderliche Anzahl benötigter Umsetzungsregeln erheblich reduziert.

Besonders vorteilhaft werden zumindest Datenformate unterstützt, die dem XML-Standard entsprechen, wie beispielsweise Rosettanet, cXML oder xCBL.

Insbesondere im Bereich geschäftlicher Transaktionen spielt die Sicherheit bei der Datenübertragung eine wichtige Rolle. Dementsprechend umfasst das Übertragen von Daten vom ersten Teilnehmer zur Umsetzungseinrichtung und/oder von der Umsetzungseinrichtung zu dem wenigstens einen zweiten Teilnehmer erfindungsgemäß bevorzugt das Entschlüsseln und/oder Verschlüsseln von Daten.

Vorteilhaft umfasst das Übertragen von Daten vom ersten Teilnehmer zur Umsetzungseinrichtung die folgenden Schritte:
- Einleiten eines Verbindungsaufbaus durch den ersten Teilnehmer,
- Übertragen einer den ersten Teilnehmer in dem Kommunikationsnetz adressierenden Kennung vom ersten Teilnehmer zur Umsetzungseinrichtung,
- Zuordnen eines Kommunikations-Ports dem ersten Teilnehmer unter Ansprechen auf die übertragene Kennung in Abhängigkeit des für den ersten Teilnehmer hinterlegten teilnehmerspezifischen Profils durch die Umsetzungseinrichtung.

Nach dieser Signalisierungsphase kann die Information über den zugeordneten Kommunikations-Port von der Umsetzungseinrichtung zum ersten Teilnehmer übertragen werden, so dass dieser Kommunikations-Port von dem ersten Teilnehmer für die weitere Datenübertragung verwendet werden kann.

Es liegt weiterhin im Rahmen der Erfindung, dass die Teilnehmer unterschiedliche Übertragungsprotokolle verwenden. Für diesen Fall kann dem ersten Teilnehmer auch ein Übertragungsprotokoll nach erfolgter Signalisierungsphase dynamisch zugeordnet werden. Entsprechend kann vom ersten Teilnehmer die Zieladresse des wenigstens einen zweiten Teilnehmers signalisiert und diesem ebenfalls ein Übertragungsprotokoll zugeordnet werden. Die Zuordnung eines Übertragungsprotokolls erfolgt dabei erfindungsgemäß in Abhängigkeit der hinterlegten teilnehmerspezifischen Profile.

Besonders vorteilhaft wird das Verfahren web-basiert ausgeführt, dementsprechend ist das Kommunikationsnetz bevorzugt ein paketorientiertes Kommunikationsnetz, insbesondere das Internet.

Die Erfindung löst das technische Problem weiterhin durch eine Vorrichtung zum Umsetzen von Daten in einem ersten Datenformat in Daten in einem zweiten Datenformat, wobei die Vorrichtung wenigstens einem Kommunikationsnetz zugeordnet ist, über das die Vorrichtung mit einem ersten und wenigstens einem zweiten Teilnehmer verbunden werden kann, umfassend
- zumindest einen Speicher zum Hinterlegen teilnehmerspezifischer Profile,
- Schnittstellen zur Datenübertragung, die automatisch in Abhängigkeit der in dem zumindest einen Speicher hinterlegten teilnehmerspezifischen Profile anpassbar sind und
- eine Einrichtung zum Umsetzen von Daten eines ersten Datenformats in Daten eines zweiten Datenformats in Abhängigkeit der in dem zumindest einen Speicher hinterlegten teilnehmerspezifischen Profile.

Der zumindest eine Speicher, in dem die teilnehmerspezifischen Profile hinterlegt werden, kann beispielsweise als Datenbank ausgebildet sein, die Profile können aber auch zum Beispiel in einem definierten Format in einem Verzeichnis auf einer Festplatte abgelegt sein.

Die automatisch anpassbaren Schnittstellen können beispielsweise durch Kommunikations-Ports und/oder Übertragungsprotokolle gebildet sein, die einem Teilnehmer dynamisch in Abhängigkeit der hinterlegten Profile zugeordnet werden.

Vorteilhaft sind in dem zumindest einen Speicher eine Vielzahl von Umsetzungsregeln hinterlegt, die dazu dienen, Daten von einem Eingangs-Datenformat in ein Ausgangs-Datenformat umzusetzen. Besonders vorteilhaft erfolgt die Umsetzung mittels eines Zwischenformates, so dass die Daten von dem Eingangs-Datenformat in das Zwischenformat und von dem Zwischenformat in das Ausgangs-Datenformat umgesetzt werden.

Der Einsatz eines Zwischenformats für einen bestimmten Geschäftsprozess, wie "Bestellung anfordern" oder "Rechnungen einreichen" reduziert erheblich Administration, Pflege und Wartung der Vorrichtung. Die Einführung eines neuen Formats erfordert für den Administrator lediglich die Definition des Formats und die Generierung von zwei Umsetzungsregeln (Mappern), die eine zur Umsetzung von dem neu eingeführten Format in das Zwischenformat und die andere für die Umsetzung von dem Zwischenformat in das neu eingeführte Format. Ohne Zwischenformat würde die Einführung eines neuen Formats Umsetzungsregeln von und in jedes bereits integrierte Format erfordern.

Um die umgesetzten Daten an den Ziel-Teilnehmer zu übertragen umfasst die Vorrichtung Mittel zum Einleiten eines Verbindungsaufbaus.

Eine weitere vorteilhafte Weiterbildung der erfindungsgemäßen Vorrichtung umfasst Mittel zum Entschlüsseln und/oder Verschlüsseln von Daten.

Die Vorrichtung weist außerdem vorteilhaft eine Nutzeroberfläche zum Hinterlegen teilnehmerspezifischer Profile auf. Besonders vorteilhaft weist die Nutzeroberfläche eine Web-Schnittstelle auf. Dementsprechend ist das Kommunikationsnetz bevorzugt ein paketorientiertes Kommunikationsnetz, insbesondere das Internet.

Das oben genannte technische Problem wird weiterhin gelöst durch ein Kommunikationssystem zur Datenübertragung, umfassend
- einen ersten Teilnehmer,
- wenigstens einen zweiten Teilnehmer, wobei der erste und der wenigstens eine zweite Teilnehmer unterschiedliche Datenformate verwenden,
- wenigstens ein Kommunikationsnetz, über das der erste Teilnehmer und der wenigstens eine zweite Teilnehmer verbunden werden können,
- wenigstens eine dem Kommunikationsnetz zugeordnete Umsetzungseinrichtung zum Umsetzen von Daten von einem ersten Datenformat in ein zweites Datenformat.

Eine Weiterbildung des Kommunikationssystems sieht vor, dass der erste Teilnehmer und der wenigstens eine zweite Teilnehmer unterschiedliche Schnittstellen für den Zugang zum Kommunikationsnetz aufweisen.

Ebenfalls im Rahmen der Erfindung liegt ein computerlesbares Medium mit einem darauf gespeicherten Programm, mit dem ein programmierbares Computersystem steuerbar ist. Das programmierbare Computersystem kann über wenigstens ein Kommunikationsnetz mit einem ersten Teilnehmer und wenigstens einem zweiten Teilnehmer verbunden werden und ist besonders vorteilhaft entsprechend der oben beschriebenen Vorrichtung ausgebildet. Das Programm bewirkt die Durchführung eines Verfahrens mit folgenden Schritten:
- Empfangen von Daten in einem ersten Datenformat von dem ersten Teilnehmer,
- automatisches Umsetzen der vom ersten Teilnehmer in einem ersten Datenformat empfangenen Daten in ein zweites, von wenigstens einem zweiten Teilnehmer auswertbares, Datenformat unter Ansprechen auf für den ersten und den wenigstens einen zweiten Teilnehmer hinterlegte teilnehmerspezifische Profile,
- Übertragen der in das zweite Datenformat umgesetzten Daten zu dem wenigstens einen zweiten Teilnehmer.

Zweckmäßigerweise bewirkt das Programm, dass in Anhängigkeit der hinterlegten teilnehmerspezifischen Profile eine Umsetzungsregel aus einer Vielzahl hinterlegter Umsetzungsregeln ausgewählt wird und die Daten mittels der ausgewählten Umsetzungsregel umgesetzt werden.

Eine besonders vorteilhafte Weiterbildung des Programms bewirkt, dass die von dem ersten Teilnehmer in einem ersten Datenformat empfangenen Daten in ein Zwischenformat und das Zwischenformat in ein zweites, von dem wenigstens einen zweiten Teilnehmer auswertbares Datenformat umgesetzt werden.

Zur Erhöhung der Sicherheit der Datenübertragung kann das Programm auf hinterlegte Verschlüsselungsalgorithmen ansprechen und bewirken, dass die von dem ersten Teilnehmer in einem ersten Datenformat empfangenen Daten entschlüsselt und/oder die in das zweite Datenformat umgesetzten Daten vor Übertragen zu dem wenigstens einen zweiten Teilnehmer verschlüsselt werden.

Gemäß einer weiteren vorteilhaften Ausführungsform wird vom ersten Teilnehmer eine den ersten Teilnehmer in dem Kommunikationsnetz adressierende Kennung empfangen und das Programm bewirkt unter Ansprechen auf die empfangene Kennung und das für den ersten Teilnehmer hinterlegte teilnehmerspezifische Profil, dass dem ersten Teilnehmer ein Kommunikations-Port zugeordnet wird.

Zweckmäßigerweise kann das Programm weiterhin bewirken, dass eine Nachricht mit einer Information über den zugeordneten Kommunikations-Port zum ersten Teilnehmer zurück übertragen wird.

Die Erfindung wird nachfolgend beispielhaft anhand bevorzugter Ausführungsformen und unter Bezugnahme auf die beigefügten Zeichnungen genauer beschrieben. Dabei bezeichnen gleiche Bezugszeichen in den Zeichnungen gleiche oder ähnliche Teile.

Es zeigen:
- Fig. 1:: eine schematische Darstellung eines erfindungsgemäßen Kommunikationssystems,
- Fig. 2:: schematisch den Aufbau einer Ausführungsform einer erfindungsgemäßen Vorrichtung zum Umsetzen von Daten und
- Fig. 3:: ein Beispiel eines Geschäftsprozesses.

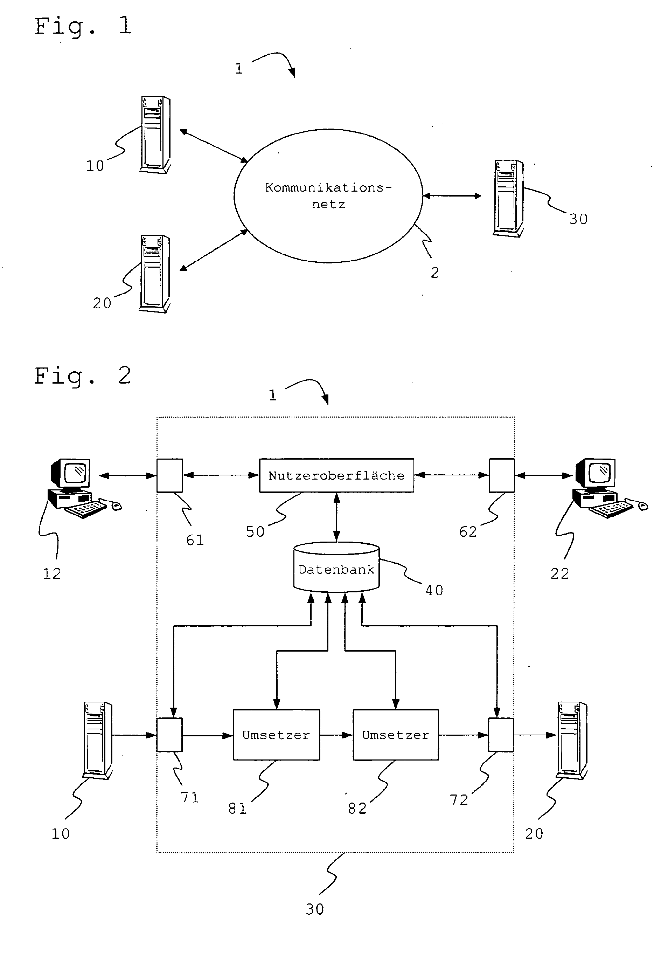

Für die Integration eines digitalen Geschäftsprozesses zwischen zwei Unternehmen, die unterschiedliche Datenformate verwenden, sieht die Erfindung ein Kommunikationssystem 1 vor, wie es schematisch in Fig. 1 dargestellt ist. Das Kommunikationssystem 1 umfasst einen ersten Teilnehmer 10 und einen zweiten Teilnehmer 20, die an ein gemeinsames Kommunikationsnetz 2 angeschlossen sind und über dieses verbunden werden können. Das Kommunikationssystem 1 umfasst weiterhin eine dem Kommunikationsnetz 2 zugeordnete Umsetzungseinrichtung 30.

Der erste und der zweite Teilnehmer 10 und 20 sind in diesem Ausführungsbeispiel ausgebildet als zwei Computersysteme zweier unterschiedlicher Unternehmen, die über das Internet 2 mit der Umsetzungseinrichtung 30 verbunden werden können. Dadurch wird eine Datenübertragung vom ersten Teilnehmer 10 zur Umsetzungseinrichtung 30 und von der Umsetzungseinrichtung 30 zum zweiten Teilnehmer 20 ermöglicht. Der Hauptmehrwert der Umsetzungseinrichtung 30 besteht in der Umsetzung der empfangenen Daten von einem Eingangsformat, das von dem sendenden Unternehmen generiert wurde in ein Ausgangsformat, das von dem empfangenden Unternehmen unterstützt wird.

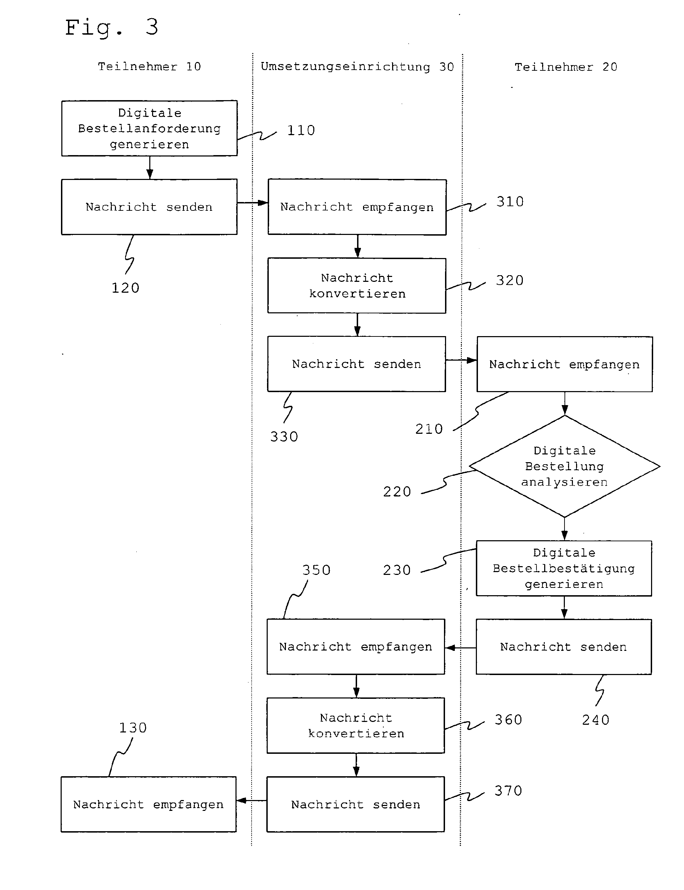

Ein Beispiel für den Aufbau der Umsetzungseinrichtung 30 ist der Fig. 2 zu entnehmen.

Die Grundidee der Erfindung liegt darin, in der Umsetzungseinrichtung 30 für eine Vielzahl von Teilnehmern teilnehmerspezifische Profile zu hinterlegen, in Abhängigkeit derer eine Formatumsetzung der für einen Geschäftsprozess auszutauschenden Daten erfolgt.

Für die Einrichtung einer B2B-Integration für ausgewählte Geschäftsprozesse zwischen zwei Unternehmen werden die Profileinträge der Unternehmen, die in der Datenbank 40 abgelegt sind, abgeglichen und in der Umsetzungseinrichtung 30 die entsprechenden Umsetzungsregeln ausgewählt.

Die Umsetzungseinrichtung 30 umfasst dementsprechend eine Nutzeroberfläche 50, über die auf einfache Weise teilnehmerspezifische Profile eingegeben werden können. Auf die Nutzeroberfläche 50 kann in diesem Ausführungsbeispiel von zwei Computersystemen 12 und 22 zweier unterschiedlicher Unternehmen über die in der Umsetzungseinrichtung 30 vorgesehenen Web-Schnittstellen 61 und 62 zugegriffen werden.

Ein teilnehmerspezifisches Profil umfasst zumindest das von dem entsprechenden Teilnehmer verwendete Datenformat für wenigstens einen ausgewählten Geschäftsprozess. Weiterhin kann das Profil Informationen über das von dem Teilnehmer verwendete Übertragungsprotokoll enthalten. Auch können weitere Informationen wie zum Beispiel die von dem Unternehmen unterstützten Geschäftsprozesse oder andere Unternehmensdaten in dem Profil hinterlegt werden.

Die Teilnehmer 10 und 20 sind in diesem Ausführungsbeispiel als Computersysteme zweier Unternehmen ausgebildet, auf denen geeignete Applikationen zur Ausführung automatisierter Geschäftsprozesse installiert sind. Die für einen ausgewählten Geschäftsprozess erforderliche Datenübertragung vom ersten Teilnehmer 10 zum zweiten Teilnehmer 20 erfolgt in Abhängigkeit der in der Datenbank 40 der Umsetzungseinrichtung 30 hinterlegten teilnehmerspezifischen Profile.

Die auszutauschenden Daten werden vom ersten Teilnehmer 10 über die Schnittstelle 71 zur Umsetzungseinrichtung 30 übertragen. Der Verbindungsaufbau zwischen erstem Teilnehmer und Umsetzungseinrichtung kann eine Signalisierungsphase umfassen, in der der erste Teilnehmer 10 zunächst eine Kennung übertragt und von der Umsetzungseinrichtung 30 das zu verwendende Übertragungsprotokoll in Abhängigkeit dieser Kennung und des hinterlegten teilnehmerspezifischen Profils des ersten Teilnehmers 10 ausgewählt wird.

Die von der Umsetzungseinrichtung 30 empfangenen Daten enthalten Informationen, anhand derer der erste und der zweite Teilnehmer und dementsprechend die diesen Teilnehmern zugeordneten, in der Datenbank 40 hinterlegten, Profileinträge identifiziert werden können.

Die in einem ersten, vom ersten Teilnehmer 10 generierten, Datenformat empfangenen Daten werden einem ersten Umsetzer 81 zugeführt. Der Umsetzer 81 setzt die Daten in ein dem entsprechenden Geschäftsprozess zugeordnetes Zwischenformat um. Für die Umsetzung wird eine Umsetzungsregel verwendet, die in Abhängigkeit des Profils des ersten Teilnehmers 10 ausgewählt wird. Die Umsetzung der Daten von dem Zwischenformat in ein zweites, von dem zweiten Teilnehmer 20 auswertbares, Datenformat erfolgt entsprechend mittels eines zweiten Umsetzers 82 in Abhängigkeit des Profils des zweiten Teilnehmers 20.

Die Übertragung der in das zweite Datenformat umgesetzten Daten zum zweiten Teilnehmer 20 erfolgt über die Schnittstelle 72, die entsprechend des vom zweiten Teilnehmer 20 verwendeten Übertragungsprotokolls automatisch in Abhängigkeit des Profils des zweiten Teilnehmers 20 angepasst werden kann.

In Fig. 3 ist als Geschäftsprozess beispielhaft der Austausch einer Bestellung zwischen dem ersten Teilnehmer 10 und dem zweiten Teilnehmer 20 dargestellt. Der erste Teilnehmer generiert zunächst eine digitale Bestellanforderung 110 und sendet eine entsprechende Nachricht 120 zur Umsetzungseinrichtung.

Nachdem die Nachricht von der Umsetzungseinrichtung empfangen wurde 310, wird sie in Abhängigkeit der in der Umsetzungseinrichtung hinterlegten teilnehmerspezifischen Profile konvertiert 320. Die unter Zuhilfenahme eines Zwischenformats in ein von dem zweiten Teilnehmer auswertbares Format konvertierte Nachricht wird von der Umsetzungseinrichtung zum zweiten Teilnehmer gesendet 330 und von diesem empfangen 210.

Nach Empfang der Nachricht wird die enthaltene digitale Bestellung vom zweiten Teilnehmer analysiert 220 und eine digitale Bestellbestätigung generiert 230. Der zweite Teilnehmer sendet nun seinerseits eine entsprechende Nachricht zur Umsetzungseinrichtung 240.

Nachdem die Nachricht von der Umsetzungseinrichtung empfangen wurde 350, wird sie in Abhängigkeit der in der Umsetzungseinrichtung hinterlegten teilnehmerspezifischen Profile unter Zuhilfenahme eines Zwischenformats in ein von dem ersten Teilnehmer auswertbares Format konvertiert 360 und zum ersten Teilnehmer gesendet 370. Mit Empfang der Nachricht 130 durch den ersten Teilnehmer ist der Geschäftsprozess abgeschlossen.

## Patentansprüche

1. Verfahren zur Datenübertragung von einem ersten Teilnehmer (10) zu wenigstens einem zweiten Teilnehmer (20), die über wenigstens ein Kommunikationsnetz (2) verbunden werden können, wobei der erste und der wenigstens eine zweite Teilnehmer (10, 20) unterschiedliche Datenformate verwenden, mit folgenden Schritten:
- Hinterlegen von teilnehmerspezifischen Profilen für den ersten und den wenigstens einen zweiten Teilnehmer (10, 20) in einer dem Kommunikationsnetz (2) zugeordneten Umsetzungseinrichtung (30),
- Übertragen von Daten in einem ersten Datenformat vom ersten Teilnehmer (10) zur Umsetzungseinrichtung (30),
- Umsetzen der vom ersten Teilnehmer (10) in einem ersten Datenformat empfangenen Daten in ein zweites, von dem wenigstens einen zweiten Teilnehmer (20) auswertbares, Datenformat in Abhängigkeit der für den ersten und den wenigstens einen zweiten Teilnehmer (10, 20) hinterlegten teilnehmerspezifischen Profilen durch die Umsetzungseinrichtung (30),
- Übertragen der in das zweite Datenformat umgesetzten Daten von der Umsetzungseinrichtung (30) zu dem wenigstens einen zweiten Teilnehmer (20).

2. Verfahren nach Anspruch 1, **dadurch gekennzeichnet, dass** das Umsetzen mittels einer Umsetzungsregel erfolgt, die aus einer Vielzahl in der Umsetzungseinrichtung (30) hinterlegter Umsetzungsregeln in Abhängigkeit der hinterlegten teilnehmerspezifischen Profile ausgewählt wird.

3. Verfahren nach einem der vorstehenden Ansprüche, **gekennzeichnet durch** das Umsetzen der vom ersten Teilnehmer (10) in einem ersten Datenformat empfangenen Daten in ein Zwischenformat und das Umsetzen des Zwischenformats in ein zweites, von dem wenigstens einen zweiten Teilnehmer (20) auswertbares, Datenformat.

4. Verfahren nach Anspruch 3, **dadurch gekennzeichnet, dass** das erste Datenformat und/oder das zweite Datenformat und/oder das Zwischenformat dem XML-Standard entspricht.

5. Verfahren nach einem der vorstehenden Ansprüche, **gekennzeichnet durch** ein Entschlüsseln und/oder Verschlüsseln von Daten.

6. Verfahren nach einem der vorstehenden Ansprüche, **dadurch gekennzeichnet, dass** das Kommunikationsnetz (2) ein paketorientiertes Kommunikationsnetz, insbesondere das Internet ist.

7. Verfahren nach einem der vorstehenden Ansprüche, **dadurch gekennzeichnet, dass** das Übertragen von Daten vom ersten Teilnehmer (10) zur Umsetzungseinrichtung (30) und/oder von der Umsetzungseinrichtung (30) zu dem wenigstens einen zweiten Teilnehmer (20) mittels eines in Abhängigkeit der hinterlegten teilnehmerspezifischen Profile ausgewählten Übertragungsprotokolles erfolgt.

8. Vorrichtung (30) zum Umsetzen von Daten in einem ersten Datenformat in Daten in einem zweiten Datenformat, wobei die Vorrichtung wenigstens einem Kommunikationsnetz (2) zugeordnet ist, über das die Vorrichtung mit einem ersten und wenigstens einem zweiten Teilnehmer verbunden werden kann, umfassend
- zumindest einen Speicher (40) zum Hinterlegen teilnehmerspezifischer Profile,
- Schnittstellen (71, 72) zur Datenübertragung, die automatisch in Abhängigkeit der in dem zumindest einen Speicher (40) hinterlegten teilnehmerspezifischen Profile anpassbar sind, und
- eine Einrichtung (81, 82) zum Umsetzen von Daten eines ersten Datenformats in Daten eines zweiten Datenformats in Abhängigkeit der in dem zumindest einen Speicher hinterlegten teilnehmerspezifischen Profile.

9. Vorrichtung (30) nach Anspruch 8, wobei in dem zumindest einen Speicher (40) eine Vielzahl von Umsetzungsregeln hinterlegt sind.

10. Vorrichtung (30) nach einem der vorstehenden Ansprüche, **dadurch gekennzeichnet, dass** die Einrichtung (81, 82) zum Umsetzen von Daten eines ersten Datenformats in Daten eines zweiten Datenformats einen ersten Umsetzer (81) zum Umsetzen von Daten eines ersten Datenformats in ein Zwischenformat und einen zweiten Umsetzer (82) zum Umsetzen von Daten des Zwischenformats in ein zweites Datenformat umfasst.

11. Vorrichtung (30) nach einem der vorstehenden Ansprüche, **gekennzeichnet durch** Mittel zum Entschlüsseln und/oder Verschlüsseln von Daten.

12. Vorrichtung (30) nach einem der vorstehenden Ansprüche, **gekennzeichnet durch** Mittel zum Einleiten eines Verbindungsaufbaus.

13. Vorrichtung (30) nach einem der vorstehenden Ansprüche, **dadurch gekennzeichnet, dass** das Kommunikationsnetz (2) ein paketorientiertes Kommunikationsnetz, insbesondere das Internet ist.

14. Kommunikationssystem (1) zur Datenübertragung, umfassend
- einen ersten Teilnehmer (10),
- wenigstens einen zweiten Teilnehmer (20), wobei der erste und der wenigstens eine zweite Teilnehmer (10, 20) unterschiedliche Datenformate verwenden,
- wenigstens ein Kommunikationsnetz (2), über das der erste Teilnehmer und der wenigstens eine zweite Teilnehmer verbunden werden können,
- wenigstens eine dem Kommunikationsnetz (2) zugeordnete Umsetzungseinrichtung (30), insbesondere nach einem der Ansprüche 8 bis 13.

15. Kommunikationssystem (1) nach Anspruch 14, wobei der erste Teilnehmer (10) und der wenigstens eine zweite Teilnehmer (20) unterschiedliche Schnittstellen für den Zugang zum Kommunikationsnetz (2) aufweisen.

16. Computerlesbares Medium mit darauf gespeichertem Programm, mit dem eine programmierbare Umsetzungseinrichtung (30) steuerbar ist, das über wenigstens ein Kommunikationsnetz (2) mit einem ersten Teilnehmer (10) und wenigstens einem zweiten Teilnehmer (20) verbunden werden kann, zur Durchführung eines Verfahrens mit folgenden Schritten:
- Empfangen von Daten in einem ersten Datenformat von dem ersten Teilnehmer (10),
- automatisches Umsetzen der vom ersten Teilnehmer (10) in einem ersten Datenformat empfangenen Daten in ein zweites, von wenigstens einem zweiten Teilnehmer (20) auswertbares, Datenformat unter Ansprechen auf für den ersten und den wenigstens einen zweiten Teilnehmer (10, 20) hinterlegte teilnehmerspezifische Profile,
- Übertragen der in das zweite Datenformat umgesetzten Daten zu dem wenigstens einen zweiten Teilnehmer (20).

17. Computerlesbares Medium nach Anspruch 16, wobei das darauf gespeicherte Programm bewirkt, dass
- in Anhängigkeit der hinterlegten teilnehmerspezifischen Profile eine Umsetzungsregel aus einer Vielzahl hinterlegter Umsetzungsregeln ausgewählt wird und
- die Daten mittels der ausgewählten Umsetzungsregel umgesetzt werden.

18. Computerlesbares Medium nach einem der vorstehenden Ansprüche, wobei das darauf gespeicherte Programm bewirkt, dass
die von dem ersten Teilnehmer (10) in einem ersten Datenformat empfangenen Daten in ein Zwischenformat und das Zwischenformat in ein zweites, von dem wenigstens einen zweiten Teilnehmer (20) auswertbares Datenformat umgesetzt werden.

19. Computerlesbares Medium nach einem der vorstehenden Ansprüche, wobei das darauf gespeicherte Programm bewirkt, dass
die von dem ersten Teilnehmer (10) in einem ersten Datenformat empfangenen Daten entschlüsselt und/oder die in das zweite Datenformat umgesetzten Daten vor Übertragen zu dem wenigstens einen zweiten Teilnehmer (20) verschlüsselt werden.

20. Computerlesbares Medium nach einem der vorstehenden Ansprüche, wobei das Programm auf Daten, die über eine Nutzeroberfläche (50) eingegeben werden, anspricht und bewirkt, dass die Daten in einem teilnehmerspezifischen Profil abgelegt werden.
